(19) Europäisches Patentamt
European Patent Office
Office européen des brevets

(11) EP 3 895 764 A1

(12) EUROPEAN PATENT APPLICATION
published in accordance with Art. 153(4) EPC

(43) Date of publication:
20.10.2021 Bulletin 2021/42

(51) Int Cl.:
A63B 71/06 (2006.01)          A63B 71/08 (2006.01)
G01L 5/00 (2006.01)

(21) Application number: 19894498.5

(22) Date of filing: 04.06.2019

(86) International application number:
PCT/KR2019/006702

(87) International publication number:
WO 2020/122334 (18.06.2020 Gazette 2020/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.12.2018 KR 20180160596

(71) Applicant: M&M Co., Ltd.
Seoul 04572 (KR)

(72) Inventors:
• GO, Hyeoncheol
  Seoul 05515 (KR)
• JEONG, Junil
  Gochang-gun Jeollabuk-do 56435 (KR)

(74) Representative: Müller-Boré & Partner
Patentanwälte PartG mbB
Friedenheimer Brücke 21
80639 München (DE)

(54) **DEVICE FOR MEASURING POWER IN RESPONSE TO VARYING STRIKING CONDITION**

(57) The present invention relates to a power measuring device capable of obtaining accurate measurement values corresponding to changes in the state or environment of a target to be struck, and in variable striking conditions, such as being struck in a state in which movement of the target occurs, and the like.

To this end, the present invention includes an air pocket group (11g) configured such that air pockets (11) are respectively formed in regions leading to a score according to striking in a target when the power measuring device (10) corresponding to variable striking conditions is installed on a target used in a fighting exercise; a piping tubes (12) formed to transmit pressure to a pressure sensor (13a) on the other side according to a change in volume on the air pocket (11) to increase the efficiency of score determination, by measuring a power at the time of strike by determining a strength (power) of the strike with an impulsive force applied to the air pocket (11); and a check valve (12a) formed in each piping tube (12) connecting each air pocket (11) at a front end of the pressure sensor (13a) to prevent air discharged when the air pocket (11) corresponding to a target point is struck from flowing to another air pocket (11) through the piping tube (12) connected to the pressure sensor (13a).

[FIG 1]

EP 3 895 764 A1

**Description**

[TECHNICAL FIELD]

The present invention relates to a power measuring device corresponding to a variable striking condition, and in particular, to a power measuring device capable of obtaining accurate measurement values corresponding to changes in the state or environment of a target to be struck, and in variable striking conditions, such as being struck in a state in which movement of the target occurs, and the like.

[BACKGROUND ART]

In general, striking sports players such as taekwondo wear hogu to protect their bodies, and use mitts, shields, and sandbags for training to increase the effectiveness of trainees.

These hogus and training tools have been unable to deviate from their simple functions as they prioritize the protection of trainees' bodies.

In other words, since training supplies, including general hogu, can only enable practice of striking while protecting trainees, there is a tricky problem in which it is hard to check a point which is struck by an athlete or trainee or a striking strength during training, and as a result, check the accuracy or strength of a strike.

In consideration of the problem, recently, electronic hogu has been developed and used as a scoring method in various martial arts events including Taekwondo as a striking sport.

Usually, the electronic hogu is used in martial arts such as taekwondo, boxing, karate, and kickboxing, and has been developed to determine a score according to strikes.

This kind of an electronic hogu has a built-in electronic chip of a contact type, and is of a type that determines whether or not a score is generated from the contact point of the electronic chip.

However, since such an electronic hogu does not consider the strength of an impact received by the opponent at all, and merely measures a score by receiving only the contact signal of the electronic chip by contact, it has the disadvantage of low efficiency in terms of determining an actual score.

In addition, in the case of the prior art, there is only mention of storing data information of a score according to the strength and weakness of a strike, and the prior art does not provide a specific method for determining the score according to the strength or weakness of the strike, and as a result, there is an disadvantage in that the efficiency is lowered in terms of judging scores, such as there are insufficient points in terms of measuring a power accurately at the time of striking.

In order to solve this disadvantage, a Korean Patent Registration No. 10-1718870 "Power Measuring Device When Striking Target" of the present applicant discloses a device for measuring a power accurately and precisely when a strike is applied to a striking device used for striking training or exercise practice by professional athletes or ordinary people, as well as a target, such as an electronic hogu used in martial arts competitions, practice competitions, martial arts training, or the like.

In addition, the present application provides a technique for more precisely performing calibration for the pressure displacement value according to variable conditions, aging of air pockets, temperature change, and the like.

[Prior art literature]

(Patent Document 1) Republic of Korea Patent Registration No. 10-1718870 "Power Measuring Device When Striking Target"

[DETAILED DESCRIPTION OF THE INVENTION]

[TECHINICAL PROBLEM]

The present invention is to solve the above problems, and an object of the present invention is to provide a power measuring device capable of obtaining accurate measured values corresponding to changes in the state of a target to be struck or environment, and in variable striking conditions, such as being struck in a state in which movement of the target occurs, and the like.

Specifically, the present invention provides a power measuring device corresponding to variable striking conditions capable of setting a zero point through calibration whenever operating since a measured value becomes non-uniform due to external influences such as aging of an air pocket that receives impact in a target or a change in temperature when the target is used for a long time.

In addition, the present invention provides a power measuring device corresponding to a variable striking condition, which calibrates a measured value by adding or subtracting the kinetic energy caused by movement to or from the amount of strike because the target is struck while moving when the power measuring device is installed on a target such as a mitt or hogu used in fighting exercises such as Taekwondo, and prevents air discharged when an air bag on one side is struck from flowing to an air bag on the other side when multiple airbags (striking points) are installed on a single target.

The objects of the present disclosure are not limited to the aforementioned objects, and any other objects not mentioned herein will be clearly understood from the following description by those skilled in the art.

[TECHNICAL SOLUTION]

To accomplish the above objects, a power measuring device corresponding to a variable striking condition according to an embodiment of the present invention includes an air pocket group 11g configured such that air pockets 11 are respectively formed in regions leading to a score according to striking in a target when the power measuring device 10 corresponding to variable striking conditions is installed on a target used in a fighting exercise; a piping tubes 12 formed to transmit pressure to a pressure sensor 13a on the other side according to a change in volume on the air pocket 11 to increase the efficiency of score determination, by measuring a power at the time of strike by determining a strength (power) of the strike with an impulsive force applied to the air pocket 11; and a check valve 12a formed in each piping tube 12 connecting each air pocket 11 at a front end of the pressure sensor 13a to prevent air discharged when the air pocket 11 corresponding to a target point is struck from flowing to another air pocket 11 through the piping tube 12 connected to the pressure sensor 13a.

Further, the present invention further includes a sensor module 13 further including a G sensor 13b in addition to the pressure sensor 13a.

Further, the pressure sensor 13a is installed at the end of the piping tube 12 extending from the air pocket 11 to detect a change in pressure according to a change in volume of the air pocket 11.

Further, the G sensor 13b is formed to measure a displacement value for calibrating a measured value by adding or subtracting kinetic energy caused by movement to or from the amount of strike because the target is struck while moving.

Further, in the present invention, the displacement value measured by the G sensor 13b is provided to the controller 15 via the A/D converter 14 to enable the controller 15 to perform calibration using the kinetic energy for the amount of strike as one parameter.

Further, the present invention further includes an A/D converter 14 that converts the analog air pressure change value into a digital signal (signal voltage), and provides the digital signal to the controller 15 when a change in air pressure due to the change in volume of the air pocket 11 that has been struck is detected by the pressure sensor 13a, and when a detected analog air pressure change value is received.

Further, the A/D converter 14 may convert the detected analog displacement change value to a digital signal (signal voltage) and provide the digital signal to the controller 15, when a change in displacement due to the displacement measured by the G sensor 13b is detected by the G sensor 13b.

[ADVANTAGEOUS EFFECTS OF THE INVENTION]

When the power measuring device corresponding to the variable striking condition according to the embodiment of the present invention is installed in the hogu worn during the Taekwondo match, the power measuring device does not accept a score unless the striking force exceeds a certain level during the match, thus allowing Taekwondo match to move forward more rapidly.

Also, the power measuring device corresponding to variable striking conditions according to another embodiment of the present invention may set a zero point through calibration whenever operating since a measured value becomes non-uniform due to external influences such as aging of an air pocket that receives impact in a target or a change in temperature when the target is used for a long time.

In addition, the power measuring device corresponding to variable striking conditions according to another embodiment of the present invention can calibrate a measured value by adding or subtracting the kinetic energy caused by movement to or from the amount of strike because the target is struck while moving when the power measuring device is installed on a target such as a mitt or hogu used in fighting exercises such as Taekwondo, and prevent air discharged when an air bag on one side is struck from flowing to an air bag on the other side when multiple airbags (striking points) are installed on a single target.

[DESCRIPTION OF THE DRAWINGS]

FIG. 1 is a diagram illustrating a power measuring device corresponding to a variable striking condition according to an embodiment of the present invention.

FIG. 2 is a diagram illustrating a hit mitt for training used in Taekwondo (FIG. 2A) and a chest protector (FIG. 2B) of hogu, as targets in which the power measuring device corresponding to a variable striking condition according to the embodiment of the present invention is installed.

FIG. 3 is a graph illustrating a signal value according to a change in pressure in the power measuring device 10 corresponding to a variable striking condition according to an embodiment of the present invention.

[BEST MODE]

Hereinafter, a detailed description of a preferred embodiment of the present invention will be described with reference to the accompanying drawings. In the following description of the present invention, detailed description of known related arts will be omitted when it is determined that the gist of the present invention may be unnecessarily obscured.

In the present specification, when one component 'transmits' data or signal to another component, this means that the component may transmit the data or signal to another component, directly or through at least one other component.

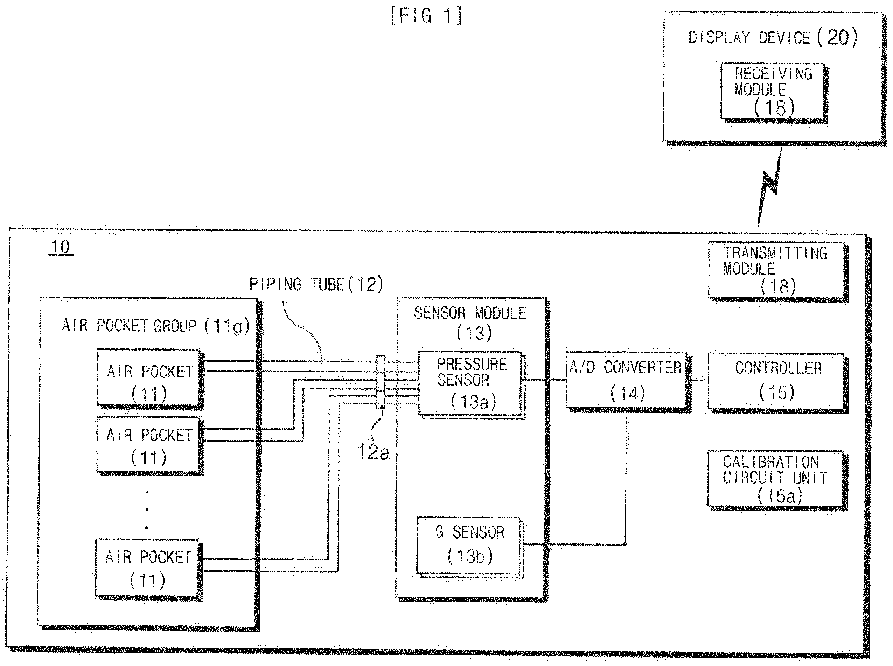

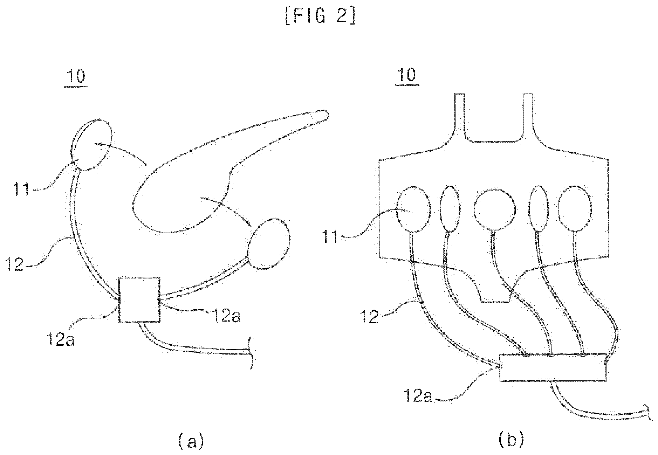

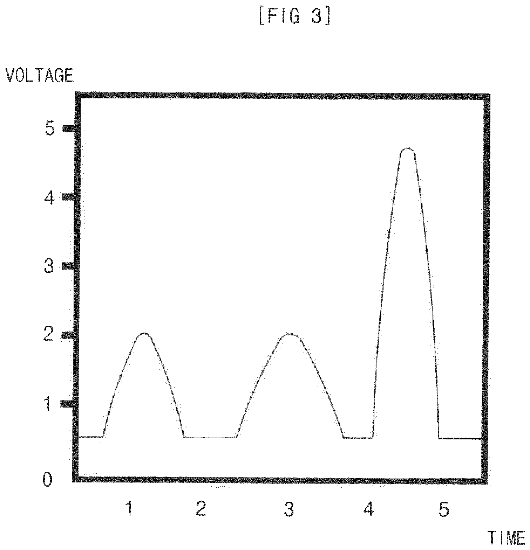

FIG. 1 is a diagram illustrating a power measuring device 10 corresponding to a variable striking condition according to an embodiment of the present invention. FIG. 2 is a diagram illustrating a hit mitt for training used in Taekwondo (FIG. 2A) and a chest protector (FIG. 2B) of hogu, as targets in which the power measuring device corresponding to a variable striking condition according to the embodiment of the present invention is installed. FIG. 3 is a graph illustrating a signal value according to a change in pressure in the power measuring device 10 corresponding to a variable striking condition according to an embodiment of the present invention.

First, referring to FIG. 1, the power measuring device 10 corresponding to a variable striking condition may include an air pocket group 11g including a plurality of air pockets 11, piping tubes 12 individually connecting the air pockets 11 and a pressure sensor 13a of a sensor module 13, the sensor module 13 including the pressure sensor 13a and a G sensor 13b, and an Analog-to-Digital (A/D) converter 14, controller 15, a calibration circuit unit 15a, and a transmitting module 16.

In addition, a display device 20 including a receiving module 21 for receiving signals and information from the power measuring device 10 corresponding to a variable striking condition through short-range wireless communication may be included as a component of the system.

The air pockets 11 constituting the air pocket group 11g may be respectively formed in regions leading to a score according to striking (hitting) in the target when the power measuring device 10 corresponding to the variable striking condition is installed on a target such as a mitt or a hogu used in a fighting exercise.

The piping tube 12 may be formed to transmit pressure to the pressure sensor 13a on the other side according to a change in volume of the air pocket 11 to increase the efficiency of score determination, such as measuring a power at the time of strike more accurately and precisely by determining a strength (power) of the strike with an impulsive force applied to the air pocket 11. That is, the piping tube 12 is a pipe connected along the air pocket 11 and is connected to the pressure sensor 13a at an end thereof. Accordingly, when the air pocket 11 is struck, the pressure sensor 13a may detect a change in air pressure according to a change in volume of the air pocket 11.

In addition, the target may include various types such as a robot, a martial arts trainer, an electronic striker, an electronic hogu, a training mitt, a training shield, a sandbag, a vehicle crash test dummy, or the like. As shown in FIG. 2, the present invention has been applied to a hit mitt for training (FIG. 2A) and a chest protector (FIG. 2B) used in Taekwondo.

When the present invention is applied to the target, the air pocket 11 may be installed in a structure built-in or exposed in various parts such as the head, shoulder, arm, abdomen, flank, and leg of the martial arts trainer. Since the air pocket 11 is disposed on the head, abdomen, flank (left/right), or the like, it is possible to measure a strength of a strike and a pinpoint strike for each body part.

A check valve 12a may be formed in each piping tube 12 connecting each air pocket 11 at the front end of the pressure sensor 13a to prevent air discharged when the air pocket 11 corresponding to a target point is struck from flowing to another air pocket 11 through the piping tube 12 connected to the pressure sensor 13a.

The sensor module 13 may further include the G sensor 13b in addition to the above-described pressure sensor 13a.

The pressure sensor 13a is installed at the end of the piping tube 12 extending from the air pocket 11 as described above to detect a change in pressure according to a change in volume of the air pocket 11

The pressure sensor 13a is electrically connected to the controller 15 while being installed on one side of the controller 15 on the target, and is connected to the air pockets 11 in the target through the piping tubes 12.

Next, the G sensor 13b may be formed to measure a displacement value for calibrating a measured value by adding or subtracting kinetic energy caused by movement to or from the amount of strike because the target is struck while moving. That is, the displacement value measured by the G sensor 13b is provided to the controller 15 via the A/D converter 14 to enable the controller 15 to perform calibration using the kinetic energy for the amount of strike as one parameter.

That is, when the G sensor 13b is installed on a target such as a mitt or a hogu used in fighting exercise and is used to calibrate the measured value by adding or subtracting kinetic energy caused by movement to or from the amount of strike because the target is struck while moving.

When a change in air pressure due to the change in volume of the air pocket 11 that has been struck is detected by the pressure sensor 13a, and when a detected analog air pressure change value is received, the A/D converter 14 may convert the analog air pressure change value into a digital signal (signal voltage), and provide the digital signal to the controller 15.

In addition, when a change in displacement due to the displacement measured by the G sensor 13b is detected by the G sensor 13b, the A/D converter 14 may convert the detected analog displacement change value to a digital signal (signal voltage) and provide the digital signal to the controller 15.

That is, the A/D converter 14 functions to convert the analog signal of the air pressure change value detected by the pressure sensor 13a and the displacement change value detected by the G sensor 13b into a digital signal.

The controller 15 may determine a score by calculating the power for the strength and weakness of a strike based on the digital signal for the air pressure change value input from the pressure sensor 13a through the A/D converter 14.

In addition, the controller 15 may provide a calibration effect on the actual air pressure change value by applying a "negative (-) weight" proportional to the displacement change value to the air pressure change value, when the displacement change value input from the G sensor 13b through the A/D converter 14 moves in the direction of a striking surface with respect to the striking surface of the pressure sensor 13a immediately before receiving the air pressure change value by the pressure sensor 13a.

In another embodiment, the controller 15 may provide a calibration effect on the actual air pressure change value by applying a "positive (+) weight" proportional to the displacement change value to the air pressure change value, when the displacement change value input from the G sensor 13b through the A/D converter 14 moves in a direction opposite to the direction of a striking surface with respect to the striking surface of the pressure sensor 13a immediately before receiving the air pressure change value by the pressure sensor 13a.

When a target having the type of a hit mitt for Taekwondo training and a hogu is applied, the controller 15 may be installed on one side of the interior of a target base and the controller 15 may determine a score for the power calibrated based on the digital signal input from the A/D converter 14.

For example, the controller 15 may calculate, as an average impulsive force, a value obtained by dividing the peak voltage, which is the maximum voltage from the point when a signal voltage of the pressure sensor 13a rises to the vertex where the rise stops, by the time taken from the time point when the signal voltage rises to the time point when the rise stops, and determine a score for the strength and weakness of a strike by adding up values obtained by applying a calculation formula for each mode to the calibration of the average impulsive force by the G sensor 13b described above and the calibration of the average impulsive force by the calibration circuit unit 15a to be described later.

In particular, when measuring the average impulsive force, the controller 15 may measure the average impulsive force by further multiplying a physical property calibration factor in consideration of the physical properties, mounting state, shape and size of the air pockets 11 and a physical change of the strike region, thus making it possible to obtain a more accurate average impulsive force.

In addition, the controller 15 includes means for providing the obtained information to the display device 20 such as a monitor, an electric sign board, a portable terminal, or the like.

To this end, the transmitting module 16 is provided on the controller 15 and the receiving module 21 is provided on the display device 20.

In this case, the wireless transmission/reception method between the transmitting module 16 of the controller 15 and the receiving module 21 of the display device 20 may include various wireless transmission/reception methods such as Wi-Fi, Bluetooth, and RFID (Radio Frequency Identification).

Accordingly, the score determined by the controller 15 is transmitted to the display device 20, for example, the receiving module 21 in a monitor through the antenna of the transmitting module 16. The receiving module 21 may receive a digital score signal transmitted from the transmitting module 16 through the antenna, and subsequently output the received score signal to the monitor, so that the score for the power of the striker can be displayed on the monitor.

When a measured value becomes non-uniform due to external influences such as aging of the air pocket 11 that receives impact in the target or a change in temperature in the case in which the target is used for a long time, the calibration circuit unit 15a may provide a function of setting a zero point according to a request by the controller 15 whenever the pressure measurement value by the pressure sensor 13a is analyzed by the controller 15.

Accordingly, when measuring the average impulsive force, the controller 15 may perform operation of calculating "the amount of change in the air pressure change value in the default state" corresponding to a difference between an initial air pressure value of each air pocket 11 and a current air pressure value of each air pocket 11, with a preset impulse (momentum) at which the air pockets 11 installed in the target may be struck, at a preset cycle, calculate an air pressure change value due to multiple strikes with the same force at the same point of the initial air pocket 11 and "the amount of change in the air pressure change value due to multiple strikes" with the same force at the same point of the current air pocket 11, use "the amount of change in the air pressure change value in a default state" as an initial calibration coefficient, and "the amount of change in the air pressure change value due to strikes" as a final calibration coefficient, and then measure an impulsive force by multiplying the initial calibration coefficient and the final calibration coefficient, thus obtaining the more accurate impulsive force.

Through this configuration, for example, when the power measuring device 10 corresponding to variable striking conditions is installed on a hogu worn during the Taekwondo match, the score is not accepted unless the striking force exceeds a certain level during the match, thus allowing Taekwondo match, to move forward more rapidly.

Hereinafter, a specific embodiment of the power measuring device 10 corresponding to variable striking conditions at the time of striking a target of the present invention will be described.

First, it is understood that, when objects collides with each other, the momentum of the system is conserved and the applied impulse is the same as the change in momentum. In this regard, description will be given below for whether the experimental relational expression and the theoretical expression are consistent.

In the present invention, two new concepts of momentum and the impulse and a new conservation law of conservation of momentum will be used.

The law of momentum conservation is just as important as the law of conservation of energy.

The law of momentum conservation is valid even when Newton's law is not appropriate, such as an object moving at a high speed close to the speed of light or a very small object such as components of an atom.

In addition, the conservation of momentum in the Newtonian dynamics system enables a motion state to be effectively analyzed even when it is difficult to directly apply Newton's laws.

When Newton's second law, $\Sigma F = ma$, is rewritten in another form, it is expressed in Equation 1 below.

[Equation 1]

$$\Sigma F = m(dv/dt) = d(mv)/dt = dp/dt$$

Here, since a mass m is a constant, the mass can enter the differential symbol, and mv is called the momentum or linear momentum of the particle, and is expressed as $p = mv$.

The momentum of an object, $p = mv$, and its kinetic energy, $K = 1/2\ mv^2$, depend on the mass and velocity of the object.

When purely mathematically speaking with respect to what is the fundamental difference between the two physical quantities, momentum is a vector whose magnitude is proportional to speed, and kinetic energy is a scalar proportional to the square of the speed.

However, in order to know the physical difference between momentum and kinetic energy, in the present invention, the impulse closely related to momentum needs to be first be defined.

When an object is subjected to a constant total force $\Sigma F$ during a time interval $\Delta t$ from $t_1$ to $t_2$, the impulse is expressed as the product of the total force and the time interval, and J is expressed as in Equation 2 below.

[Equation 2]

$$J = \Sigma F\ (t_2 - t_1) = \Sigma F \Delta t$$

In this case, $\Sigma F = (p_2 - p_1) / (t_2 - t_1)$, and when the equation is transformed, $\Sigma F\ (t_2 - t_1) = p_2 - p_1$, because dp/dt is equal to what is obtained by dividing the total change in momentum $p_2 - p_1$ by the time interval $t_2 - t_1$. When comparing this expression with Equation 2 above, it can be expressed as Equation 3 below.

[Equation 3]

$$J = p_2 - p_1$$

Equation 3 is called the Impulse-Momentum Theorem.

In other words, the change in momentum generated on an object during a given time is equal to the impulse of the total force acting on the object.

The impulse is a vector quantity with the same direction as ΣF, and the SI unit is newton-second (Ns).

The impulse-momentum theorem works even when the force is not constant. Newton's second law may be confirmed as in Equation 4 below by integrating Equation 1 with respect to time.

[Equation 4]

$$\int_{t_1}^{t_2} \sum \vec{F}\,dt = \int_{t_1}^{t_2} \sum \frac{d\vec{p}}{dt}\,dt = \int_{p_1}^{p_2} d\vec{p} = \vec{p}_2 - \vec{p}_1$$

$$\vec{J} = \int_{t_1}^{t_2} \sum \vec{F}\,dt$$

By this definition, Equation 3, which is the impulse-momentum theorem, is applied even when the net force changes with time.

[Reference drawing]

The reference drawing above is a graph showing the impulse (Ch8. Univ. Physics. by Young). As shown in (b) of the reference drawing, when there is collision of an object with constant momentum, it can be seen that hard collision or cushioned collision have the same impulse regardless of hard collision or cushioned collision (the areas at the bottom of the curve are equal to each other).

However, it can be seen that different impulsive forces are applied to the object in a hard collision with a large force in a short time, and in a cushioned collision with a small force in a relatively long time.

That is, when an object A collides with an object B with a constant kinetic energy of constant weight and speed, the collision energy is identical with respect to various variables such as the physical properties of B, that is, mass, hardness, elastic modulus, and the state in which it is placed, but the impulsive force transferred to the object B may vary depending on various variables such as deformation according to physical properties and action and reaction due to movement.

Therefore, in the present invention, a striking device capable of measuring the impulse is produced, and the average impulsive force is derived using the convex sine wave in the reference drawing and used and the formula is the same as Equation 5 below.

[Equation 5]

Impulsive force N = delta mv (motion change = impulse Ns) / delta t (time change S)

Impulsive force N = impulse Ns/times

In other words, instead of measuring the kinetic energy of the striking boxer's fist and the impulsive energy when being struck, the pressure change for the volume change of the air pocket 11 due to the strike is indirectly detected by an air pressure sensor.

That is, the change value in the air pressure according to the degree of deformation of the air pocket 11 with respect to the size of the fist (the area in contact with the air pocket 11) and the intensity and speed of the pushing force is analyzed through division by time.

To explain a little more in detail, when striking the air pocket 11 in FIG. 3, the maximum voltage at the vertex at which the signal voltage of the pressure sensor rises and stops the rise is called the peak voltage, and a value obtained by dividing the peak voltage by the time taken up to the vertex is called the virtual average impulsive force.

In order to calculate the original impulsive force, it is necessary to calculate the impulse of the entire area of the sine wave and divide the impulse by the total time from the rising point to the falling point of the sine wave. However, since it is easy to filter the surging caused by physical deformation and interference with respect to the impulsive force, calculation is quick and convenient, and it is more accurate to judge the instantaneous destructive force in martial arts only by the time until the impulsive force is transmitted, the peak voltage of half wave is used with priority, and the impulse can be derived and used at any time as needed for calibration or necessity.

That is, when calculation with the peak voltage of the signal value according to the pressure change is made, an arbitrary virtual impulsive force value as shown in Table 1 below may be derived as shown in the graph of FIG. 3.

[Table 1]

| |
| --- |
| a=2/0.5=4 |
| b=2/1 =2 |
| c=5/0.5=10 |

However, the above value is a measure of the change in air pressure in the air pocket 11 according to the volume change while the air pocket 11 is struck and crushed, and it is difficult to see it as an accurate impulsive force yet. The reason for this is that the above example value may vary depending on various physical changes such as the displacement change amount of the target, aging of the air pocket 11, temperature, physical properties, that is, hardness, modulus of elasticity, tensile force, basic air pressure, mounting state, shape and size of the pocket, thickness of the striking area, or the like.

Therefore, the physical properties of the air pocket 11 are standardized, and calibration of the overall physical properties is required as shown in Equation 6 below according to the physical properties of the Taekwondo hogu (target) and the mount type and location.

[Equation 6]

$$\text{Maximum signal value/time} \times \text{property calibration factor}$$

An example of calibrating the property calibration coefficient will be described as follows.

A skeleton that determines the positions of the air pockets 11 while supporting the Taekwondo hogu is installed in the taekwondo hogu, and the air pockets 11 are installed from the physique in a state where the air pockets 11 are mounted on the skeleton at a position connected to each score.

Thereafter, when synthetic resin material, which is a material constituting the Taekwondo body, is injected, the air pockets 11 are maintained as thin as possible by about 5 mm from the skin (outer skin) at each position.

After leaving the frame, a certain air pressure (0.7 bar) is put into the air pocket 11 to check the position and assembly state of the air pocket 11 to determine whether there is a leak. The standard air pressure ( 0.1~0.3 bar) is again injected to the air pocket 11 and the peak voltage and response speed of the signal value is observed while striking the air pocket 11 of the target using a test bench made with a determined amount of impulse (momentum) to determine the standard air pressure in the optimal state.

That is, since the deformation rate of the air pocket 11 varies depending on the thickness and density from the air pocket 11 to the skin, when the thickness of the skin is thick, the shock absorption rate for the amount of strike increases, so the deformation rate of the air pocket 11 becomes smaller, and in this case, it is necessary to reduce the standard pressure used than that of a thinner skin.

In other words, it is assumed that the characteristics such as peak voltage and response speed are most appropriate when the average pressure used at the standard thickness and density of the skin is set to 0.2 bar, and a calibration factor value in this case is 1. When the shock absorption rate is high and therefore the standard air pressure is set to 0.1 bar that is low because the thickness of the skin is thick and the density is low, the property calibration coefficient is defined to be 0.9, while the shock absorption rate is low and therefore the standard air pressure is set to 0.3 bar because the thickness of the skin is thin and the density is high, the property calibration coefficient is defined to be 1.1, which are regarded as a calibration for the volume displacement according to the physical characteristics.

The impulsive force N = peak voltage/time X 1 when skin is a standard thickness and has a standard density

The impulsive force N = peak voltage/time X 0.9 when the skin is thicker than the standard thickness and has a low density.

The impulsive force N = peak voltage/time X 1.1 When the skin is thinner than the standard thickness and has a high density.

However, no matter how standardized and manufactured, assembling and manufacturing errors occur. Therefore, as a calibration in the final stage of production, all production processes are standardized to produce hit mitts and hogus for taekwondo training. After manufacturing a test bench with an arbitrarily determined impulse (momentum) that can strike each of air pockets 11 mounted in the striking mitts and hogu, it is desirable to measure an average impulsive force more accurately by performing final calibration while striking the hit mitts and hogu with several strengths, from the minimum strength to the maximum strength.

$$\text{Average impulsive force} = \text{maximum signal value/time} \times \text{property}$$

$$\text{calibration coefficient} \times \text{final calibration coefficient}$$

An example of calibrating such a final calibration coefficient is as follows.

While the aforementioned physical property calibration was for the air pocket 11 of each target, this is a final check and calibration. When an entire Taekwondo Hogu is manufactured and mounted on a target, a striker body is fixed.

Calibration is performed on peak characteristics and response speed of the signal voltage of the air pressure sensor for the physical action and reaction on the mass difference according to the assembly tolerance and the density of the striker body, and the installation angle and assembly state of the hit mitt and hogu physique for Taekwondo training corresponding to the internal skeleton.

That is, in a case where the weight of the assembled Taekwondo Hogu physique and synthetic resin is constant, when it is assumed that the average constant of the spring steel (spring constant) to the physique corresponding to the skeleton is 1 when the average mass (G) according to the density of the Taekwondo Hogu body is 600G, the average strain of the air pocket is differently applied due to a change in the action and reaction force at the time of striking with a force of 1 Newton, which is the same amount of impulse (momentum).

When substituting this into the formula, the following is expressed.

$$\text{Average impulsive force } N = \text{impulse/time} \times \text{physical property}$$

$$\text{calibration coefficient} \times \text{final calibration coefficient (body mass} \times \text{spring}$$

$$\text{constant)}$$

Detailed description of electronic hardware specifications and score derivation

Signal range of air pressure sensor = 500 ~ 4500 mv

Response speed of air pressure sensor = 3 Khz

Sampling Rate = 1Khz

Resolution = 12 bits = 4096 steps.

When the signal voltage value used becomes 4500 - 500 = 4000 mv, the score may be calculated by dividing 4000 mv into 4096 steps, that is, from 1 to 4000 steps.

For example, assuming that a signal peak voltage is 3000 mv and a sampling rate is 1 Khz (1000/1 second), the virtual impulsive force is calculated for person A with a displacement time of 3 ms up to 3000 mv and person B with a displacement time of 1 ms.

A = 3000/3 = 1000 N

B = 3000/1 = 3000 N

It can be seen that the peak voltages of two persons A and B are the same but the impulsive force of B is larger than that of A as much as the difference in speed.

However, the impulse of A is larger than that of B as the speed is delayed.

In this way, the impulsive force is obtained by applying the physical property calibration coefficient and the final calibration coefficient to the virtual impulsive force value to measure a power and determine the power as a score.

As described above, according to the power measuring device 10 corresponding to the variable striking condition of the present invention, it is possible to receive data during taekwondo training or all data such as all measured scores and training degrees and achievement degrees via Wi-Fi or Bluetooth, which is a wireless communication system to accomplish convenience, promote the utility value as an martial arts sports wearable device that builds and manages or analyzes an online server and its potential as a game, and promote fair evaluation as a martial artist, and interest in the fair evaluation, ranking and training, thus promoting the activation of Taekwondo, a Korean martial art.

As described above, although preferred embodiments of the present invention have been disclosed in the present specification and drawings, and specific terms are used, these are only used in a general sense to easily explain the technical content of the present invention and help the understanding of the present invention and it is not intended to limit the scope of the present invention. It is obvious to those of ordinary skill in the art that other modifications based on the technical idea of the invention can be implemented in addition to the embodiments disclosed therein.

**Claims**

1.    A power measuring device corresponding to variable striking conditions, comprising:

an air pocket group (11g) configured such that air pockets (11) are respectively formed in regions leading to a score according to striking in a target when the power measuring device (10) corresponding to variable striking conditions is installed on a target used in a fighting exercise;
a piping tubes (12) formed to transmit pressure to a pressure sensor (13a) on the other side according to a change in volume on the air pocket (11) to increase the efficiency of score determination, by measuring a power at the time of strike by determining a strength (power) of the strike with an impulsive force applied to the air pocket (11); and
a check valve (12a) formed in each piping tube (12) connecting each air pocket (11) at a front end of the pressure sensor (13a) to prevent air discharged when the air pocket (11) corresponding to a target point is struck from flowing to another air pocket (11) through the piping tube (12) connected to the pressure sensor (13a).

2.    The power measuring device of claim 1, further comprising:
a sensor module (13) further including a G sensor (13b) in addition to the pressure sensor (13a).

3.    The power measuring device of claim 2, wherein the pressure sensor (13a) is installed at an end of the piping tube (12) extending from the air pocket (11) to detect a change in pressure according to a change in volume of the air pocket (11).

4.    The power measuring device of claim 3, wherein the G sensor (13b) is configured to measure a displacement value for calibrating a measured value by adding or subtracting kinetic energy caused by movement to or from an amount of strike because the target is struck while moving.

5.    The power measuring device of claim 4, wherein the displacement value measured by the G sensor (13b) is provided to a controller (15) via an A/D converter (14) to enable the controller (15) to perform calibration using the kinetic energy for the amount of strike as one parameter.

6.    The power measuring device of claim 5, further comprising:
the A/D converter (14) configured to convert an analog air pressure change value into a digital signal (signal voltage), and provide the digital signal to the controller (15) when a change in air pressure due to the change in volume of the air pocket (11) that has been struck is detected by the pressure sensor (13a), and when a detected analog air pressure change value is received.

7.    The power measuring device of claim 6, wherein the A/D converter (14) is configured to convert the detected analog displacement change value to a digital signal (signal voltage) and provide the digital signal to the controller (15) when a change in displacement due to the displacement measured by the G sensor (13b) is detected by the G sensor (13b).

[FIG 1]

DISPLAY DEVICE (20)

RECEIVING MODULE (18)

10

PIPING TUBE (12)

AIR POCKET GROUP (11g)

AIR POCKET (11)

AIR POCKET (11)

AIR POCKET (11)

12a

SENSOR MODULE (13)

PRESSURE SENSOR (13a)

G SENSOR (13b)

A/D CONVERTER (14)

TRANSMITTING MODULE (18)

CONTROLLER (15)

CALIBRATION CIRCUIT UNIT (15a)

EP 3 895 764 A1

11

[FIG 2]

10

11

12

12a

12a

(a)

10

11

12

12a

(b)

[FIG 3]

## INTERNATIONAL SEARCH REPORT

| International application No. |
| --- |
| **PCT/KR2019/006702** |

| A. CLASSIFICATION OF SUBJECT MATTER |
| --- |
| *A63B 71/06(2006.01)i, A63B 71/08(2006.01)i, G01L 5/00(2006.01)i* |
| According to International Patent Classification (IPC) or to both national classification and IPC |

| B. FIELDS SEARCHED |
| --- |
| Minimum documentation searched (classification system followed by classification symbols)<br>A63B 71/06; A63B 69/00; A63B 69/22; A63B 71/08; A63B 71/12; A63F 13/00; G01L 5/00 |
| Documentation searched other than minimum documentation to the extent that such documents are included in the fields searched<br>Korean utility models and applications for utility models: IPC as above<br>Japanese utility models and applications for utility models: IPC as above |
| Electronic data base consulted during the international search (name of data base and, where practicable, search terms used)<br>eKOMPASS (KIPO internal) & Keywords: power, punch, air pocket, score |

| C. DOCUMENTS CONSIDERED TO BE RELEVANT | | |
| --- | --- | --- |
| Category* | Citation of document, with indication, where appropriate, of the relevant passages | Relevant to claim No. |
| A | KR 10-1718870 B1 (UFK CO., LTD.) 24 March 2017<br>See paragraphs [0030], [0044]-[0045]; claim 1; and figure 2. | 1-7 |
| A | JP 2002-065919 A (NAMCO LTD.) 05 March 2002<br>See paragraph [0021]; and figure 4. | 1-7 |
| A | KR 20-0280386 Y1 (MOON, Jong In) 04 July 2002<br>See page 2; and figure 1. | 1-7 |
| A | KR 10-2005-0015552 A (HONG, Jong Hak) 21 February 2005<br>See paragraphs [0022]-[0033]; and figures 1-3. | 1-7 |
| A | KR 10-2005-0015554 A (HONG, Jong Hak) 21 February 2005<br>See paragraphs [0021]-[0053]; and figures 1-4. | 1-7 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 OCTOBER 2019 (04.10.2019) | **04 OCTOBER 2019 (04.10.2019)** |
| Name and mailing address of the ISA/KR<br>Korean Intellectual Property Office<br>Government Complex Daejeon Building 4, 189, Cheongsa-ro, Seo-gu,<br>Daejeon, 35208, Republic of Korea<br>Facsimile No. +82-42-481-8578 | Authorized officer<br><br>Telephone No. |

Form PCT/ISA/210 (second sheet) (January 2015)

**INTERNATIONAL SEARCH REPORT**
Information on patent family members

International application No.

**PCT/KR2019/006702**

| Patent document cited in search report | Publication date | Patent family member | Publication date |
|---|---|---|---|
| KR 10-1718870 B1 | 24/03/2017 | KR 10-1718872 B1 | 24/03/2017 |
| JP 2002-065919 A | 05/03/2002 | None | |
| KR 20-0280386 Y1 | 04/07/2002 | KR 10-2003-0071465 A | 03/09/2003 |
| KR 10-2005-0015552 A | 21/02/2005 | KR 10-0513124 B1 | 07/09/2005 |
| | | KR 20-0333599 Y1 | 17/11/2003 |
| KR 10-2005-0015554 A | 21/02/2005 | KR 10-0513129 B1 | 07/09/2005 |
| | | KR 20-0333600 Y1 | 17/11/2003 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101718870